# EUROPEAN PATENT APPLICATION

(11) **EP 4 459 762 A1**
(43) Date of publication of application: **06.11.2024**
(21) Application number: 22915755.7
(22) Date of filing: 15.12.2022
(51) Int. Cl.: H01M 50/213, H01G 11/12, H01G 11/78, H01M 50/242, H01M 50/271, H01M 50/289, H01M 50/317, H01M 50/325, H01M 50/342, H01M 50/35, H01M 50/367, H01M 50/392

(54) **ELECTRICITY STORAGE PACK**

(30) Priority: 27.12.2021 JP 2021213403
(71) Applicant: Panasonic Intellectual Property Management Co., Ltd., Kadoma-shi, Osaka 571-0057 (JP)
(72) Inventor: MURAYAMA, Chifumi, Osaka 571-0057 (JP); SHIMIZU, Keisuke, Osaka 571-0057 (JP); OGINO, Hirotaka, Osaka 571-0057 (JP)
(74) Representative: Novagraaf International SA
(86) International application number: PCT/JP2022/046262
(87) International publication number: WO 2023/127531

(57) **Abstract**

An electricity storage pack includes: at least one electricity storage block that includes a plurality of cells; and a housing that houses the at least one electricity storage block. The at least one electricity storage block and the housing are fixed to one another by a fixing shaft that extends in a first direction and penetrates a first side face of the housing and the at least one electricity storage block.

## Description

### TECHNICAL FIELD

The present disclosure relates to an electricity storage pack.

### BACKGROUND ART

An electricity storage pack includes a plurality of electricity storage blocks. Each electricity storage block includes a plurality of cells (elementary batteries) held in a cell holder (for example, Patent Literature (PTL) 1). In the electricity storage pack disclosed in PTL 1, respective electricity storage blocks that are linearly connected are fixed to one another by screws that penetrate the cell holders.

### Citation List

### Patent Literature

[PTL 1] Japanese Unexamined Patent Application Publication No. 2013-218932

### SUMMARY OF THE INVENTION

The electricity storage pack includes a housing that houses a plurality of electricity storage blocks. Although the housing needs to be firmly fixed to the electricity storage blocks, no specific configuration is disclosed. For example, when the housing and the cell holders are fixed to one another by fixtures such as screws, design changes, such as making the cell holders stronger than necessary, are required to increase the fixing strength between the housing and the electricity storage blocks.

An object of the present disclosure is to provide an electricity storage pack that is capable of firmly fixing a housing and electricity storage blocks to one another.

An electricity storage module according to one aspect of the present disclosure is an electricity storage pack that includes at least one electricity storage block including a plurality of cells, and a housing that houses the at least one electricity storage block. The at least one electricity storage block and the housing are fixed by a fixing shaft that extends in a first direction and penetrates one side face of the housing and the at least one electricity storage block.

According to one aspect of the present disclosure, the housing and the electricity storage blocks are firmly fixed to one another.

### BRIEF DESCRIPTION OF THE DRAWINGS

[FIG. 1] FIG. 1 is a perspective view of an electricity storage pack according to an example of an embodiment.
[FIG. 2] FIG. 2 is a cross-sectional view taken along line A-A in FIG. 1.
[FIG. 3] FIG. 3 is an exploded perspective view of the electricity storage pack according to an example of the embodiment.
[FIG. 4] FIG. 4 is an exploded perspective view of an electricity storage block.
[FIG. 5] FIG. 5 is an exploded perspective view of an inter-block member.
[FIG. 6] FIG. 6 is an exploded perspective view of a lid.
[FIG. 7] FIG. 7 is a schematic view of an electricity storage pack according to another example of the embodiment.
[FIG. 8] FIG. 8 is a schematic view of an electricity storage pack according to another example of the embodiment.
[FIG. 9] FIG. 9 is a schematic view of an electricity storage pack according to another example of the embodiment.
[FIG. 10A] FIG. 10A is a schematic view of an electricity storage pack according to another example of the embodiment.
[FIG. 10B] FIG. 10B is a schematic view of an electricity storage pack according to another example of the embodiment.

### DESCRIPTION OF EMBODIMENT

Hereinafter, an embodiment according to the present disclosure will be described with reference to the drawings. The shapes, materials, and the number of components described below are examples, and can be changed appropriately in accordance with the specification of an electricity storage module.

### (Electricity Storage Pack)

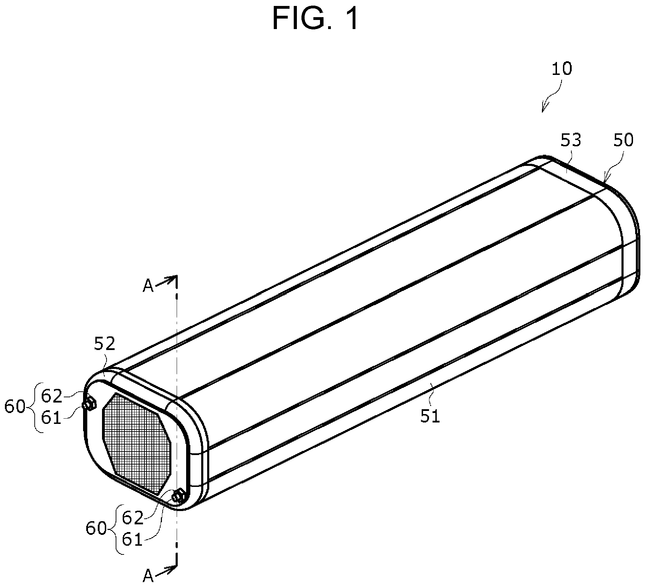

With reference to FIG. 1 to FIG. 4, electricity storage pack 10 according to an example of an embodiment will be described.

Electricity storage pack 10 is mainly mounted in an electrically powered vehicle to supply electric power to a drive motor. Electricity storage pack 10 according to the present disclosure is used, for example, as a power source for electric bikes, assisted bicycles, electric wheelchairs, electric tricycles, electric carts, and the like. However, the present disclosure does not specify the usage of electricity storage pack 10, which can also be used as a power source for various electrical equipment used outdoors, such as power tools.

Electricity storage pack 10 according to the present disclosure is capable of firmly fixing housing 50 and at least one electricity storage block 20 to one other, as will be described in detail below. In addition, electricity storage pack 10 according to the present disclosure is capable of reducing the number of components.

As illustrated in FIG. 1 to FIG. 3, electricity storage pack 10 includes a plurality of electricity storage blocks 20 each including a plurality of cells 30, circuit board 40 in which a protection circuit that controls charging and discharging of cells 30 is mounted, housing 50 that houses electricity storage blocks 20, fixing shafts 60 that penetrate one side face of housing 50 and at least one electricity storage block 20. In the following description, at least the direction in which electricity storage blocks 20 are aligned and in which fixing shafts 60 extend is defined by a first direction.

### (Electricity Storage Block)

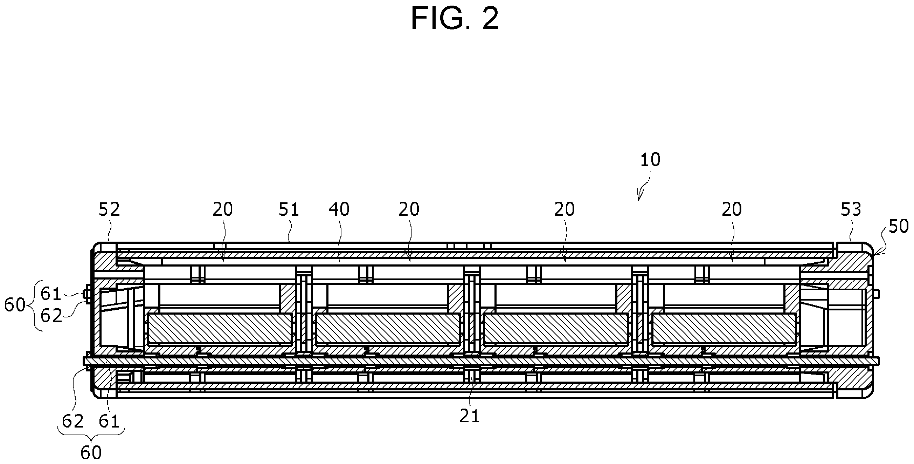

As illustrated in FIG. 2 to FIG. 4, electricity storage pack 10 includes a plurality of electricity storage blocks 20. In the present embodiment, electricity storage pack 10 includes four electricity storage blocks 20 that are connected in series in the longitudinal direction. However, the present disclosure is not limited to this embodiment. Inter-block member 21 is disposed between adjacent ones of electricity storage blocks 20. Inter-block member 21 includes a wall that separates adjacent ones of electricity storage blocks 20, a cushioning material, and the like.

Each of electricity storage blocks 20 is a unit in which a plurality of cells 30 are arranged in multi-tiers. In electricity storage block 20, a plurality of cells 30 are arranged so that the longitudinal direction of cells 30 is parallel to the first direction.

Electricity storage block 20 includes a plurality of cells 30, cell holders 31 and 32 that hold respective cells 30, and filler 35 that fills the gaps between cells 30. In electricity storage block 20 according to the present embodiment, ten cells 30 are arranged in three rows of three, four, and three cells (three parallel units to be described below) in a hexagonal grid.

Electricity storage block 20 may include a plurality of parallel units including a plurality of cells 30. Here, in the parallel units, both end-face electrodes of cells 30 may be connected in parallel via lead plates. In the parallel units, cells 30 may be arranged in a row. Adjacent parallel units may be arranged such that the polarities of the end-face electrodes of cells 30 are opposite. Moreover, in electricity storage block 20, adjacent parallel units may be connected in series.

Each of cells 30 is, for example, a cylindrical lithium-ion secondary battery with end-face electrodes as described above. Cell 30 is not limited to the present embodiment, but may be other secondary batteries such as a nickel-metal hydride battery, nickel-cadmium battery, or lithium polymer battery, or other electricity storage devices such as a capacitor. Cell 30 is a cylindrical secondary battery, but the present disclosure is not limited to the embodiment. Cell 30 may be a square secondary battery.

Cell 30 may include: an electrode group in which positive and negative electrodes are opposite to each other with a separator therebetween and are wound; a can that houses the electrode group together with electrolyte, and includes a tubular part and a bottom part that closes one end of the tubular part; and a sealing member that closes the opening at the other end of the can. The sealing member may be electrically connected to one of the positive electrode and the negative electrode via a lead or the like. The can may be electrically connected to the other of the positive electrode and the negative electrode via a lead or the like. At least one end of cell 30 in the first direction may include an exhaust part. This configuration allows gas accumulated in cell 30 to be discharged to the outside of cell 30 and the outside of electricity storage block 20 via the exhaust part. The exhaust part may be a non-reversible valve that opens by breaking the imprint, or a reversible valve that forms an exhaust path by further compressing a compressed elastic material under gas pressure. In the first direction, cell 30 may include exhaust parts at both ends.

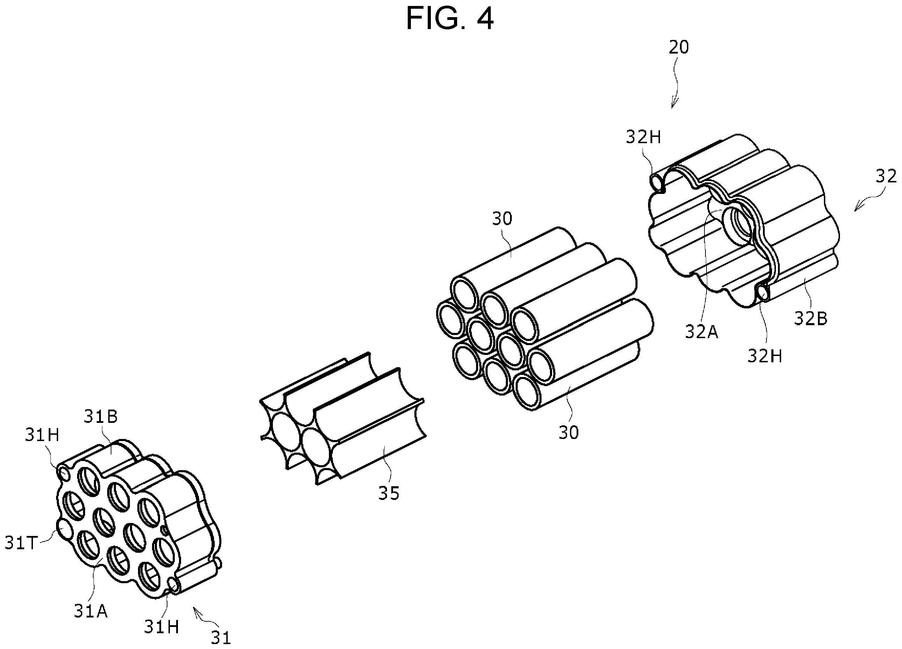

As illustrated in FIG. 4, cell holders 31 and 32 are divided into two at the generally longitudinal central part of cells 30. Cell holder 31 holds one side of cells 30 arranged in a hexagonal grid. Cell holder 31 includes holding part 31A and lateral wall 31B. In holding part 31A, tubular storage parts, with which one longitudinal end parts of arranged cells 30 are respectively engaged, are integrally formed. Lateral wall 31B is formed along the outer periphery of cells 30. Each of holding part 31A of cell holder 31 and holding part 32A of cell holder 32 includes a plurality of openings that penetrate therethrough in the first direction (longitudinal direction of cell 30). Current collection and gas exhaustion of cells 30 are performed through the openings.

Lateral wall 31B of cell holder 31 includes holes 32H that penetrate cell holder 31 in the longitudinal direction. Fixing shaft 60 is inserted into hole 32H. Hole 32H is engaged with spacer 21B of inter-block member 21. Although holes 32H are provided at two positions, the present disclosure is not limited to the embodiment. The number of holes 32H may correspond to the number of fixing shafts 60. Cell holder 31 may also include injection hole 31T into which a potting material is poured after cells 30 are housed and assembled in cell holders 31 and 32.

Cell holder 32 includes the same configuration as cell holder 31, and thus, the description thereof is omitted. Cell holder 31 and cell holder 32 are connected to each other by an engagement of an engagement part at the other longitudinal end of lateral wall 31B of cell holder 31 with an engagement part at one longitudinal end of lateral wall 32B of cell holder 32.

Filler 35 fills the gaps between cells 30 arranged in electricity storage block 20. Filler 35 is disposed to fill the gaps between cells 30 arranged in a hexagonal grid as described above. Although filler 35 is made of a material with some elasticity, such as hard plastic or potting material, filler 35 is not limited to the present embodiment. Filler 35 may include a heat-absorbing material such as aluminum hydroxide. When filler 35 is made of resin, filler 35 may be integral with cell holder 31.

### (Inter-block Member)

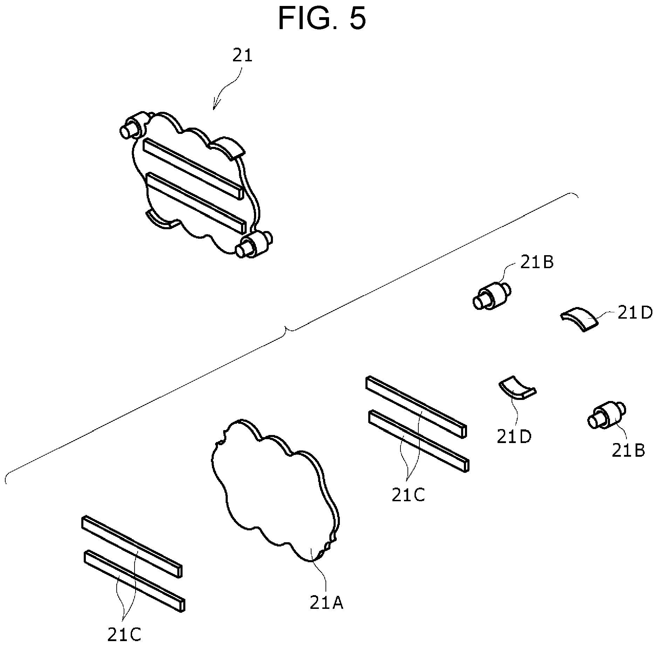

As illustrated in FIG. 5, inter-block member 21 defines the distance between two adjacent electricity storage blocks 20, forming a gap between two adjacent electricity storage blocks 20. Inter-block member 21 includes: plate-shaped cover 21A interposed between two adjacent electricity storage blocks 20 described above; spacers 21B and 21D that are disposed along the outer peripheral edge of inter-block member 21 and are coupled with cell holders 31 and 32 of two electricity storage blocks 20; and spacers 21C interposed between cover 21A and each of cell holders 31 and 32 in the first direction.

Cover 21A is arranged such that the thickness of cover 21A is parallel to the first direction, and covers the openings of cell holders 31 and 32. When gas is discharged from the exhaust parts of cells 30 through the openings, cover 21A prevents the gas from reaching adjacent electricity storage block 20. This prevents cell holders 31 and 32 and cells 30 of adjacent electricity storage block 20 from being thermally damaged due to the heat of the gas. A material with a high melting point is preferrable for the material of cover 21A. Examples of the material with a high melting point include aluminum, copper, iron, and stainless steel.

Each spacer 21B is tubular in shape that extends in the first direction. Both ends of spacer 21B in the first direction have hollow protrusions that are engaged and coupled with through holes 31H of cell holder 31 and through hole 31H of cell holder 32. Fixing shaft 60 is inserted into the hollow part of spacer 21B together with through hole 31H.

Spacer 21C is in a shape of a block. One end faces of spacers 21C in the first direction are in contact with cover 21A, and the other end faces of spacers 21C in the first direction are in contact with holding parts 31A and 32A of cell holders 31 and 32. Each spacer 21C may be arranged between adjacent ones of a plurality of openings of holding parts 31A and 32A. Spacer 21C may partially overlap with the openings in the first direction. In the present embodiment, it may be that a plurality of spacers 21C are disposed, some of spacers 21C are arranged between a first main face of cover 21A and one electricity storage block 20, and between a second main face (back side of the first main face) of cover 21A and the other electricity storage block 20. Spacers 21C may be fixed to cover 21A with, for example, adhesive. Spacers 21C may be mechanically engaged with cover 21A.

Each of spacers 21D is in a shape of plate that extends in the first direction. Each spacer 21D includes protrusions at both ends in the first direction that are engaged with cell holders 31 and 32. Cell holders 31 and 32 are engaged with the protrusions of spacers 21D. When part of the peripheral edge of cover 21A is curved, the end face (main face) of spacer 21D in a second direction perpendicular to the first direction may be a curved surface along the curve of the peripheral edge of cover 21A. This curved surface contacting the curved peripheral edge of cover 21A allows cover 21A to be fixed more firmly in the second direction.

Spacers 21B and 21D are disposed along the edge of cover 21A (either the outer or inner peripheral edge) and do not overlap with cover 21A in the first direction. This configuration allows spacers 21B and 21D to preferentially regulate the movement of cover 21A in the second direction perpendicular to the first direction.

Spacers 21B and 21D also allow cover 21A to move in the first direction. Spacers 21B and 21D each have a rigidity higher than the rigidity of spacers 21C. In other words, spacers 21C are softer or have a lower Young's modulus or a lower elastic modulus than spacers 21B and 21D. Due to such a magnitude relationship of rigidity, when gas is discharged from the exhaust part of cell 30 to cover 21A, among spacers 21C disposed on both main faces of cover 21A, spacers 21C closer to the first main face where gas is discharged are pulled in the first direction, and spacers 21C closer to the second main face that is the back side of the first main face are compressed in the first direction. These spacers 21C and cover 21A are capable of increasing the distance in the first direction between electricity storage block 20 that includes cells 30, from which gas is blown, and cover 21A. This displaces cover 21A in the first direction, widening the exhaust path around electricity storage block 20 that discharges gas and prompting the gas exhaust to the outside of electricity storage pack 10.

Spacers 21B and 21D may be made of electrically insulating and rigid plastic. Spacers 21B and 21D may be made of, for example, polycarbonate. Spacer 21C may be made of an electrically insulating and elastic material. Spacer 21C may be made of, for example, chloroprene rubber or flame-retardant foam resin. Spacers 21C may be arranged in a compressed state under the force in the first direction when spacers 21C are arranged between two adjacent electricity storage blocks 20. Whether each spacer 21C is arranged in a compressed state can be checked as described below. When electricity storage pack 10 is disassembled and the sum of the dimensions of at least one spacer 21C after disassembly is larger than the sum of the dimensions of at least one spacer 21C aligned in the first direction before disassembly, spacer 21C can be considered to have been arranged between two electricity storage blocks 20 in a compressed state.

At least one of spacers 21B and 21D may penetrate hole 31H instead of the outer peripheral edge of cover 21A. Here, it is preferable that at least one of spacers 21B and 21D does not overlap with the inner peripheral edge of through hole 31H in the first direction. It is also preferable that spacers 21B and 21D surround cover 21A while being in close proximity to the edge of cover 21A. However, spacers 21B and 21D do not necessarily have to be in contact with the edge of cover 21A. In two adjacent electricity storage blocks 20, the exhaust parts of cells 30 may face toward one common inter-block member 21. This configuration can simplify the arrangement of inter-block members 21.

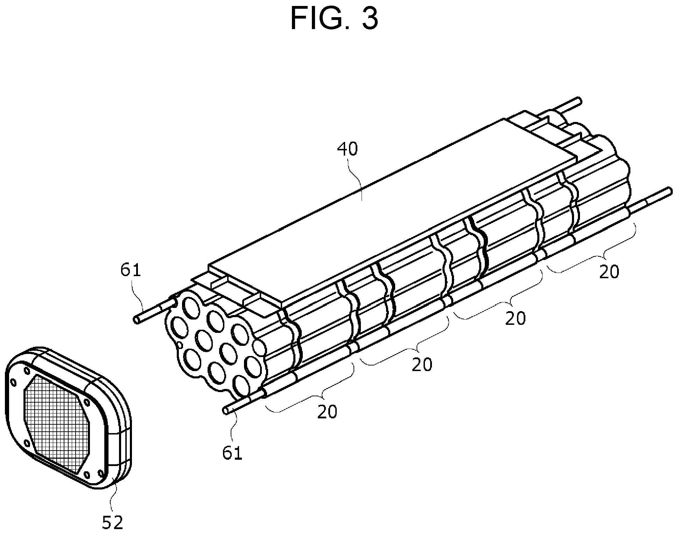

As illustrated in FIG. 2 and FIG. 3, a protection circuit that controls charging and discharging of cells 30 is mounted in circuit board 40 as described above. Electronic components that implement the protection circuit are mounted in circuit board 40. Circuit board 40 is in a shape of plate that extends along the longitudinal direction. In such a manner, circuit board 40 is disposed which extends along the lengthwise direction in which cells 30 are connected in series. With this, the distance between circuit board 40 and each cell 30 is short, facilitating wiring to each cell 30 for detecting intermediate potentials and the like.

The protection circuit also includes a circuit that detects voltage of each of cells 30 and interrupts charge and discharge current. When the voltage of any of cells 30 becomes lower than the minimum voltage, the protection circuit interrupts the discharge current by turning off a switching device that interrupts the discharge current. When the voltage of any of cells 30 becomes higher than the maximum voltage, the protection circuit stops charging by turning off a switching device that stops charging. In such a manner, electricity storage pack 10 can be used safely while protecting cells 30 by including the protection circuit that detects the voltage of each of cells 30 and controls charging and discharging.

In addition, circuit board 40 also includes a temperature detection circuit that detects temperature anomalies of cells 30. The temperature detection circuit detects an abnormal rise in the temperature of each cell 30 detected by a temperature sensor, and executes current control of discharging and charging of cell 30, or stops charging and discharging of cell 30. Electricity storage pack 10 may also include current collecting members that electrically connect electricity storage blocks 20 to one another. These current collector plates are adjacent to each other.

### (Housing)

As illustrated in FIG. 1 to FIG. 3, housing 50 houses electricity storage blocks 20, and also protects electricity storage blocks 20. Housing 50 includes: tubular body 51 with the longitudinal direction as the first direction; and lids 52 and 53 that close both longitudinal ends of body 51. Housing 50 may include a ring packing sandwiched between the openings of body 51 at both ends and lids 52 and 53 to close the openings of body 51 with a waterproof structure. Housing 50 includes a pair of lids 52 and 53 that close the openings of body 51 at both ends. However, body 51 may be in a bottomed tubular shape in which only one end face of body 51 is open and the end face opening is closed with only lid 52.

Body 51 is made of a metal, such as aluminum, which is strong and has excellent heat dissipation properties. Body 51 is in a rectangular tubular shape. Body 51 is in a square tubular shape with both end parts open. Body 51 may include a groove or a projection that extends along the longitudinal direction of body 51 to improve the strength. In addition, in order to insulate metal body 51, the surface of body 51 may be covered with laminated film, vinyl, or the like.

Lids 52 and 53 are made of hard plastic, but are not limited to the present embodiment. Lids 52 and 53 may be made of metal. Lids 52 and 53 include holes 52H and 53H which fixing shafts 60 to be described below penetrate. Although holes 52H are provided at two positions and holes 53H are provided at two positions, the present disclosure is not limited to the present embodiment. The number of holes 52H and 53H may correspond to the number of fixing shafts 60. One of lids 52 and 53 may include a discharge connector for discharge from cell 30 or a charge connector for charging cell 30.

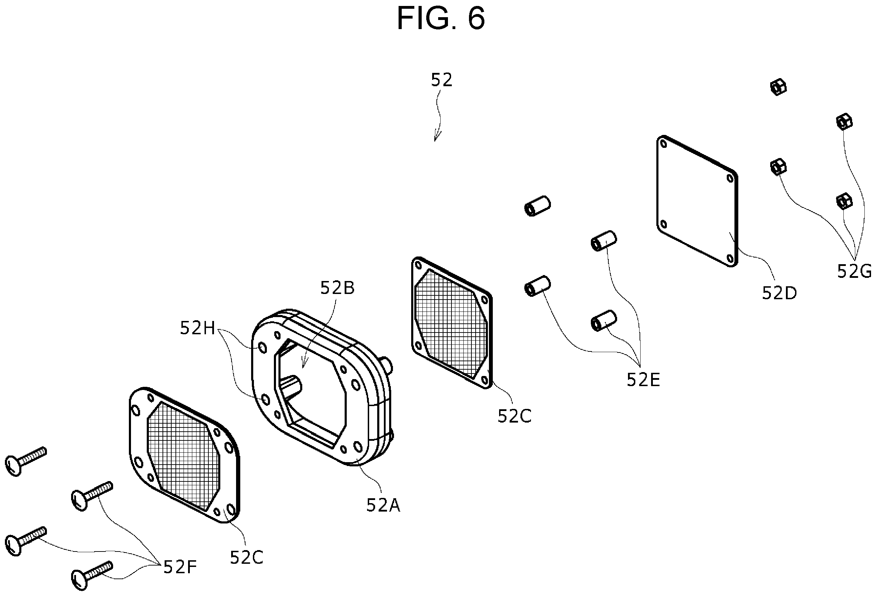

As illustrated in FIG. 6, lid 52 includes frame body 52A with exhaust port 52B, a plurality of porous bodies 52C that close exhaust port 52B, shielding plate 52D interposed between porous body 52C and electricity storage block 20 in the first direction, spacers 52E that are interposed between porous body 52C and shielding plate 52D and define the distance between porous body 52C and shielding plate 52D, screws 52F that penetrate the respective insertion holes of frame body 52A, porous bodies 52C, spacers 52E and shielding plate 52D, and nuts 52G fastened to one longitudinal ends of screws 52F.

Frame body 52A may be made of hard plastic or metal. Frame body 52A includes holes 52H which fixing shafts 60 penetrate and insertion holes which screws 52F penetrate. Four insertion holes are provided for four screws 52F. However, the number of insertion holes and the number of screws 52F are not limited to such an example.

Each of porous bodies 52C may be, for example, a perforated metal with numerous through-holes in an aluminum sheet. Electricity storage pack 10 includes two porous bodies 52C for frame body 52A. Porous bodies 52C prevent the contents of cells 30 from being discharged along with gas to the outside of electricity storage pack 10. Moreover, as the gas passes through porous bodies 52C, heat from the gas is transferred to porous bodies 52C, allowing the gas having passed to be cooled. Only one porous body 52C may be provided.

Shielding plate 52D is interposed between electricity storage block 20 closest to lid 52 and porous bodies 52C in the first direction. Shielding plate 52D is capable of blocking the gas discharged from cells 30 of electricity storage block 20 and preventing hot gas from blowing directly onto porous bodies 52C. Shielding plate 52D may be made of a material with a higher melting point than porous body 52C. For example, shielding plate 52D may be made of steel, stainless steel, or ceramics.

Spacers 52E form a gap between porous body 52C and shielding plate 52D. A spacing between spacers 52E defines the exhaust path that allows gas to enter the gap. Each spacer 52E is tubular, and screw 52F penetrates the hollow part of spacer 52E. Four spacers 52E are provided corresponding to the number of screws 52F. However, the number of spacers 52E is not limited to four.

Each screw 52F includes a screw head at one end, and is fastened to nut 52G at the other end. Screw 52F and nut 52G may be made of hard plastic or metal. In a similar manner to lid 52, lid 53 may also include a frame body, porous bodies, a shielding plate, spacers, screws, and nuts. Lid 53 may be made of only a frame body with no exhaust port.

### (Fixing Shaft)

As illustrated in FIG. 1 to FIG. 3, each of fixing shafts 60 is a shaft that penetrates housing 50 and four electricity storage blocks 20 to fasten and fix housing 50 and four electricity storage blocks 20 along the longitudinal direction. More specifically, fixing shaft 60 penetrates lids 52 and 53 of housing 50 and cell holders 31 and 32 of electricity storage blocks 20. Fixing shafts 60 are capable of firmly fixing housing 50 and electricity storage blocks 20 to one another. In addition, fixing shafts 60 reduces the number of components in electricity storage pack 10.

Fixing shaft 60 includes rod 61 that penetrates lids 52 and 53 of housing 50 and cell holders 31 and 32 of each of four electricity storage blocks 20, and fixtures 62 that fix both ends of rod 61 to lids 52 and 53 of housing 50. Rod 61 is a metal shaft with screw parts at both ends and has a length that penetrates housing 50 in the first direction. Fixtures 62 are nuts, which press against the end faces of lids 52 and 53. Fixing shafts 60 are not limited to the above configuration, but may include a rod made of a metal shaft and fixtures, such as a push nut or E-ring.

Fixing shaft 60 is not limited to the present embodiment. Fixing shaft 60 may penetrate at least one electricity storage block 20 and one lid 52 to fix electricity storage block 20 and housing 50. In such a configuration, a separate fixing shaft to fix the electricity storage blocks to one another and a separate fixing shaft to fix electricity storage block 20 and the other lid 53 are required. Moreover, fixing shaft 60 may penetrate all electricity storage blocks 20 and one lid 52 to fix electricity storage blocks 20 and housing 50. In such a configuration, a separate fixing shaft to fix electricity storage block 20 and the other lid 53 is required.

Fixing shaft 60 is not limited to the present embodiment, but may be configured to penetrate at least one electricity storage block 20 and body 51 to fix electricity storage block 20 and housing 50.

### (Advantageous Effects)

With electricity storage pack 10 according to the present disclosure, storage blocks 20 and housing 50 are fixed penetrating at least one electricity storage block 20 and one lid 52, so that electricity storage blocks 20 and housing 50 can be firmly fixed. Moreover, the number of components can be reduced compared to an electricity storage pack that includes fixing shafts to fix electricity storage blocks 20 to one another and fixtures to fix lids 52 and 53 and adjacent electricity storage blocks 20. In particular, there is no need to increase the strength of cell holders 31 and 32 more than necessary, unlike the configuration in which lids 52 and 53 are fixed by fixtures to adjacent electricity storage blocks 20 without penetrating electricity storage blocks 20.

### (Other Embodiments)

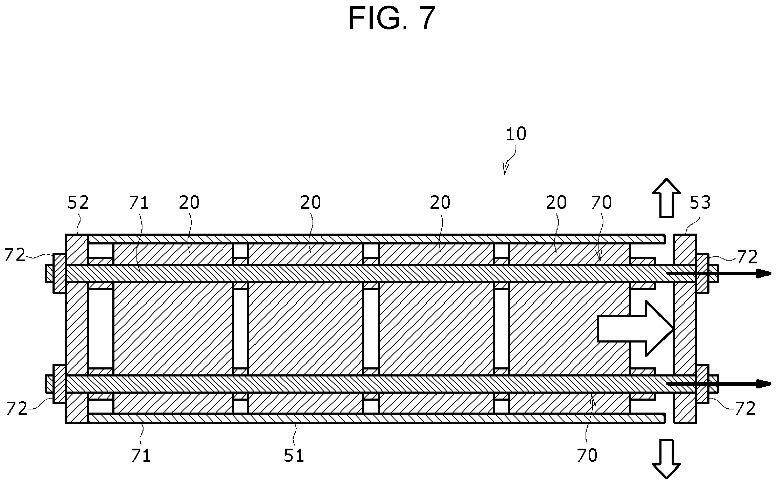

With reference to FIG. 7 to FIG. 10B, electricity storage pack 10 according to another example of the embodiment will be described. In the following description, components that are different from or added to electricity storage pack 10 described above will be described with different reference numerals. The components that are the same as those in electricity storage pack 10 described above will be described with the same reference numerals and their descriptions will be omitted.

As illustrated in FIG. 7, electricity storage pack 10 includes fixing shafts 70 that extend along the axis of electricity storage pack 10 when the internal pressure of housing 50 reaches at least a predetermined pressure. More specifically, each fixing shaft 70 includes rod 71 that is plastically deformed along the axis when pulled at a predetermined pressure or higher. Rod 71 may include a reduced-diameter part that is plastically deformed along the axis when pulled at a predetermined pressure or higher.

With the above configuration, when the internal pressure of housing 50 increases due to the pressure of the gas discharged from the inside of cell 30 during malfunction of cell 30, causing high pressure to act on lids 52 and 53 of housing 50, the axial extension of fixing shaft 70 separates body 51 from the lids 52 and 53, generating a gap between body 51 and lids 52 and 53. This allows the gas inside housing 50 to be discharged to the outside. Lids 52 and 53 may include parts that are fitted into body 51 of housing 50. The configuration regulates the direction of displacement of lids 52 and 53 when rod 71 is deformed, allowing electricity storage pack 10 to be sealed again after the completion of gas discharge.

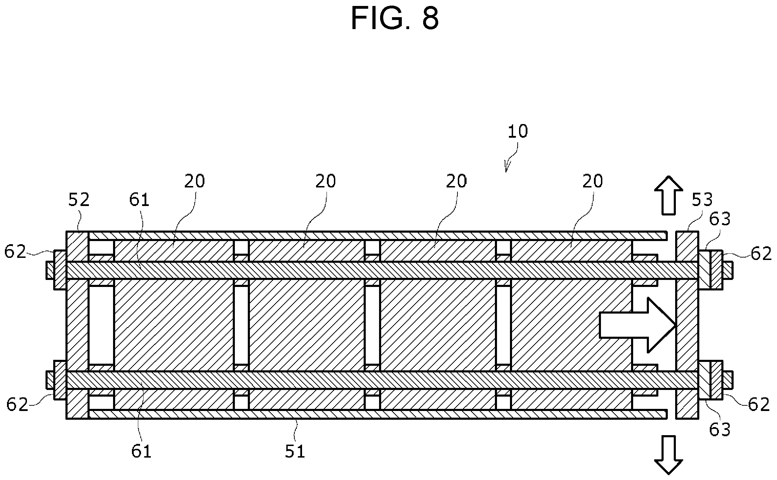

As illustrated in FIG. 8, in electricity storage pack 10, fixing shafts 60 and lids 52 and 53 of housing 50 are fixed to one another via spring washers 63 as elastic members. More precisely, spring washers 63 are disposed between fixtures 62 of fixing shafts 60 and lids 52 and 53. Each spring washer 63 always axially biases fixture 62, and contracts when force against the biasing force is applied. Spring washer 63 may be a conical spring washer.

With the above configuration, when the internal pressure of housing 50 increases due to the pressure of gas discharged from the inside of cell 30 during malfunction of cell 30, causing high pressure to act on lids 52 and 53 of housing 50, spring washers 63 contract, separating body 51 from lids 52 and 53 and generating a gap between body 51 and lids 52 and 53. This allows the gas inside housing 50 to be discharged to the outside.

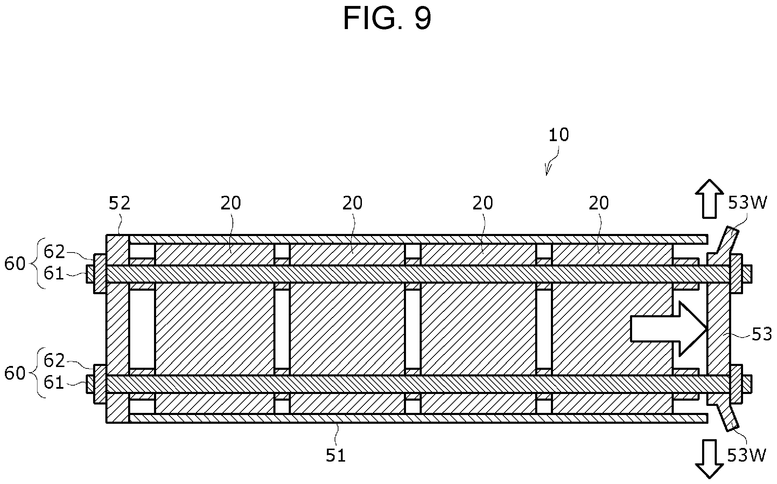

As illustrated in FIG. 9, in electricity storage pack 10, lid 52 has edge part 52W with a thickness that is smaller than the thickness of lid 52 excluding edge part 52W.

With the above configuration, when the internal pressure of housing 50 increases due to the pressure of the gas discharged from the inside of cell 30 during malfunction of cell 30, causing high pressure to act on lids 52 and 53 of housing 50, the plastic deformation of edge part 53W outward in the longitudinal direction generates a gap between body 51 and lid 52. This allows the gas inside housing 50 to be discharged to the outside.

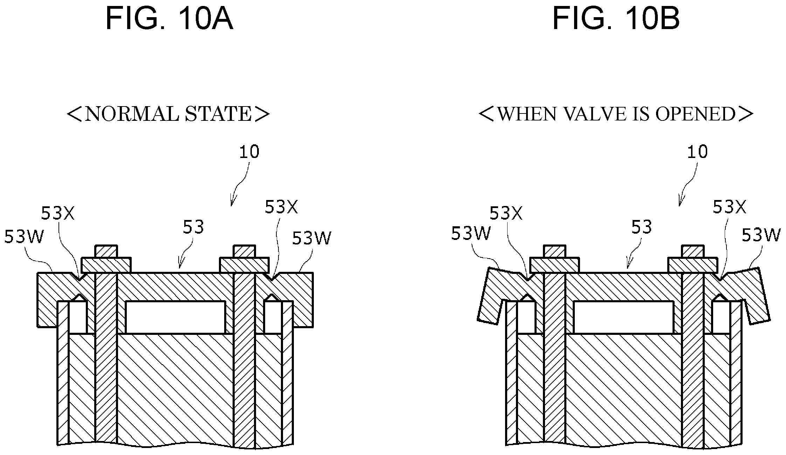

As illustrated in FIG. 10A, in the second direction, groove-shaped thin part 53X along the shape of edge part 53W may be disposed inside relative to edge part 53W of frame body 53A. This allows lid 52 to be opened by displacing the region from thin part 53X to edge part 53W as illustrated in FIG. 10B. In this case, the peripheral edge of edge part 53W may include a wall-shaped flared part that extends toward body 51. This flared part stabilizes the arrangement of lid 53 relative to body 51.

The present invention is not limited to the above-described embodiment and variations thereof. It is of course possible that various changes and modifications are made within the scope of matters described in the claims of the present application.

### REFERENCE MARKS IN THE DRAWINGS

- 10: electricity storage pack
- 20: electricity storage block
- 21: inter-block member
- 21A: cover
- 21B: spacer
- 21C: spacer
- 21D: spacer
- 30: cell
- 31: cell holder
- 31A: holding part
- 31B: lateral wall
- 31H: hole
- 31T: injection hole
- 32: cell holder
- 32B: lateral wall
- 32H: hole
- 35: filler
- 40: circuit board
- 50: housing
- 51: body
- 52: lid
- 52A: frame body
- 52B: exhaust port
- 52C: porous body
- 52D: shielding plate
- 52E: spacer
- 52G: screw
- 52F: nut
- 52H: hole
- 53: lid
- 53H: hole
- 53W: edge part
- 53X: thin part
- 60: fixing shaft
- 61: rod
- 62: fixture
- 63: spring washer
- 70: fixing shaft
- 71: rod

## Claims

1. An electricity storage pack comprising:
at least one electricity storage block that includes a plurality of cells; and
a housing that houses the at least one electricity storage block,
wherein the at least one electricity storage block and the housing are fixed to a fixing shaft that is elongated in a first direction and penetrates a first side face of the housing and the at least one electricity storage block.

2. The electricity storage pack according to claim 1,
wherein the fixing shaft penetrates the first side face and a second side face of the housing in the first direction.

3. The electricity storage pack according to claim 1 or claim 2, comprising
a cell holder that holds the plurality of cells,
wherein the fixing shaft penetrates an insertion hole of the cell holder.

4. The electricity storage pack according to claim 1,
wherein the at least one electricity storage block comprises a plurality of electricity storage blocks, and
the plurality of electricity storage blocks are arranged in the first direction.

5. The electricity storage pack according to claim 4,
wherein each of the plurality of electricity storage blocks includes an insertion hole,
the insertion holes of the plurality of electricity storage blocks overlap with each other in the first direction, and
the fixing shaft penetrates the insertion holes.

6. The electricity storage pack according to claim 4 or claim 5, comprising
an inter-block member between two adjacent ones of the plurality of electricity storage blocks in the first direction with a gap between the two adjacent ones of the plurality of electricity storage blocks.

7. The electricity storage pack according to claim 6,
wherein the inter-block member includes a cover that is plate-shaped, a first spacer that is disposed along an edge of the cover and connects the two adjacent ones of the plurality of electricity storage blocks, and a second spacer that is interposed between the cover and the two adjacent ones of the plurality of electricity storage blocks.

8. The electricity storage pack according to claim 7,
wherein the first spacer includes a rigidity higher than a rigidity of the second spacer, and
the first spacer does not overlap with the cover in the first direction.

9. The electricity storage pack according to claim 7 or claim 8,
wherein the second spacer is disposed in a compressed state between the cover and the at least one electricity storage block.

10. The electricity storage pack according to any one of claims 7 to 9, comprising
a cell holder that holds the plurality of cells,
wherein, in the cell holder, the plurality of cells are arranged in a second direction perpendicular to the first direction,
each of the plurality of cells includes an exhaust part at one end of the cell in the first direction, and
the exhaust part opposes the cover in the first direction.

11. The electricity storage pack according to any one of claims 1 to 10,
wherein the housing includes a body in a tubular shape and a lid that closes each of end parts of the body, and
the fixing shaft penetrates the lid.

12. The electricity storage pack according to claim 11,
wherein the lid includes:
a vent;
a porous body that closes the vent; and
a shielding plate that is interposed between the porous body and the at least one electricity storage block in the first direction.

13. The electricity storage pack according to claim 12, comprising
a third spacer that is disposed between the porous body and the shielding plate,
wherein a gap is provided between the porous body and the shielding plate.

14. The electricity storage pack according to any one of claims 11 to 13,
wherein, when an internal pressure of the housing is a predetermined pressure or higher, a gap is generated between the body and the lid by an extension of the fixing shaft along an axis of the fixing shaft.

15. The electricity storage pack according to any one of claims 11 to 13,
wherein the lid is fixed to the fixing shaft via an elastic member, and
when an internal pressure of the housing is a predetermined pressure or higher, a gap is generated between the body and the lid against a biasing force applied by the elastic member.

16. The electricity storage pack according to any one of claims 11 to 13,
wherein the lid includes an edge part with an axial thickness that is smaller than an axial thickness of the lid excluding the edge part, the edge part being on an outer side relative to a part of the lid where the fixing shaft penetrates, and
when an internal pressure of the housing is a predetermined pressure or higher, a gap is generated between the body and the lid by deformation of the edge part.
